# EUROPEAN PATENT APPLICATION

(11) **EP 4 811 184 A1**
(43) Date of publication of application: **23.09.2026**
(21) Application number: 25164175.9
(22) Date of filing: 17.03.2025
(51) Int. Cl.: G06F 21/44, G01N 21/01

(54) **METHOD FOR CERTIFYING A CONDITION OF A SCREEN OF AN ELECTRONIC DEVICE**

(71) Applicant: Wallbid Limited, London N3 1XW (GB)
(72) Inventor: Stivaktakis, Vasileios, 15234 Chalandri (GR)
(74) Representative: Kouzelis, Dimitrios

(57) **Abstract**

The present invention refers to a computer-implemented method for certifying a condition of a screen (11) of an electronic device (10). The method comprises the steps of executing a screen condition test for identifying a condition of a screen surface (110) of an electronic device, verifying the identity of the electronic device (10), and generating a certificate on the condition of the screen (11) based on the result of the screen condition test and the verification of the identity of the electronic device (10).

## Description

The present invention refers to a method for certifying a condition of a screen surface of an electronic device, in particular a mobile electronic device.

Electronic devices, such as smartphones and tablets, have become an integral part of modern life. These devices feature a screen, known also as screen glass, which is susceptible to damage from drops, impacts, and other accidents. The integrity of the screen is crucial for both the functionality and aesthetics of the device.

Insurance companies and device manufacturers frequently need to assess the condition of a screen of an electronic device.

It is thus an object of the present invention to propose a trustworthy, precise and user-friendly method for certifying a condition of a screen of an electronic device.

In particular, a computer-implemented method for certifying a condition of a screen of an electronic device is proposed. The method comprises the step of executing a screen condition test for identifying a condition of a screen surface of an electronic device, the step of verifying the identity of the electronic device, and the step of generating a certificate on the condition of the screen based on the result of the screen condition test and the verification of the identity of the electronic device. The method can in particular be implemented as an application.

The proposed method has several advantages. The screen condition test results in a high accuracy of identifying the condition of the screen. Further, due to the screen condition test and the verification of the identity of the electronic device, both being electronically executed, fraud regarding the screen condition and/or the identity of the device can be reduced or eliminated.

Further, by allowing end users to obtain said certificate for their used electronic devices without needing to visit an assessment centre or ship their device, the method becomes significantly more convenient. The digital nature of the method increases the scalability of a product requiring said certificate, such as an insurance product, enabling it to cater to a larger number of users and a wider range of models of electronic devices. By eliminating the need for physical assessment centres, the operational costs for an external that requires said certificate from the end user, said external being for example an insurance carrier, are significantly reduced. The decrease in operational costs can lead for example to a reduction in insurance premiums, making the insurance product more affordable and thus accessible to a wider consumer base. The ease of claiming insurance reimbursements can encourage users to repair and continue using their electronic devices, thereby extending the lifecycle of the devices and leading to cost savings.

Advantageously, the method may comprise the step of executing an underwriting flow comprising the previously described steps of executing the screen condition test, of verifying the identity of the electronic device and of generating the certificate on the condition of the screen. The certificate is here an insurability certificate.

Advantageously, the step of executing the underwriting flow is initiated by detection of a user input. The user input triggers the initiation of the underwriting flow.

Advantageously, the method comprises the step of executing a claim flow comprising the previously described steps of executing the screen condition test, of verifying the identity of the electronic device and of generating the certificate on the condition of the screen. The certificate is here a damage certificate.

Thus, the proposed method is an easy, safe, and incorruptible process for the remote sale of insurance contracts that cover the cost of replacing the screen of a used electronic device that has been damaged due to an accident. The method can also include the remote confirmation of the damage to an insured electronic device for the recipient of the insurance to receive the expected compensation. Remotely assessing the condition of the screen of an electronic device can be used either for confirming the absence of defects during the process of selling an insurance contract or for confirming the presence of defects during the process of validating a compensation claim. The accurate and incorruptible collection of the identity of the electronic device can be used either during the process of selling an insurance contract or during the process of validating a compensation claim to validate that the device that the device for which the claim has been submitted matches the one insured.

Advantageously, the step of executing the claim flow is initiated by detection of a user input. The user input triggers the initiation of the claim flow.

The method may advantageously further comprise the step of outputting the certificate, in particular automatically, to an external source. The external source may be a computer, computer system or server.

Advantageously, the certificate may comprise information about the condition of the screen of the electronic device and information about the identity of the electronic device. The information about the condition of the screen may comprise the condition of the screen, in particular whether the screen is damaged or not. The information about the identity of the electronic device may particularly comprise an image identifier of the device.

### Screen condition test for identifying a condition of a screen surface of an electronic device

In the following, the step of executing the screen condition test for identifying a condition of a screen surface of an electronic device is described.

The execution of the screen condition test comprises the step of instructing a front-facing imaging device to capture an image of the screen surface reflected in a reflective surface, in particular a mirror, receiving the image, and processing the image to detect a defect of the screen surface.

According to an advantageous configuration, the execution of the screen condition test comprises the step of instructing a front-facing imaging device to capture at least two, i.e. two or more, images of the screen surface reflected in a reflective surface, in other words, a reflection of the screen surface in a reflective surface, with at least one different predefined screen background characteristic. This means in particular that the background of the screen, in other words the background of the displayed contents, is predefined differently regarding at least one background characteristic. For example, the at least two images may be captured with a different brightness of the screen background. The execution of the screen condition test further comprises the step of receiving the at least two images and the step of processing the at least two (received) images to detect a defect of the screen surface. The step of receiving the at least two images can also be understood as receiving at least two images of the reflection of the surface screen in a reflective surface that are captured with at least one different predefined background characteristic. The processing of the at least two images may in particular involve comparing the at least two images for detecting a defect of the screen surface. It is noted that one or more defects and/or defect types can be detected by the execution of the screen condition test. Further, one or more front-facing imaging devices can be instructed for capturing the at least two images mentioned above. The expression "with a different predefined background characteristic" can also be understood as "with a predefined difference in at least one background characteristic". It means in particular that the at least one background characteristic is of the same type but has different predefined values or features, depending on whether the at least one background characteristic is of quantitative or qualitative nature, respectively, for the at least two images. For example, the at least one background characteristic can be the brightness of the screen. Here, the expression "with at least one different predefined background characteristic" means that each image of the at least two images is captured with a different brightness value for the screen. The at least one different background characteristic advantageously results in a different overall background of the screen and thus different captured images.

Capturing at least two images of the reflected screen with at least one different background characteristic offers several advantages for detecting defects of the screen surface such as e.g. cracks.

Different background characteristics can make certain types of defects more visible. For example, a crack might be more noticeable against a light background than a dark one, or vice versa. By basing the detection on at least two images of the reflected screen differing in at least one background characteristic, actual defects can be distinguished from artifacts that may appear in only one image due to lighting conditions or reflections. Thus, false positives can be reduced. Further, some defects may be more visible with certain background characteristics. Using different backgrounds of the screen for capturing the at least two images increases the likelihood of detecting a wider range of defect types. In addition, a difference in at least one screen background characteristic for the at least two images may help reveal the depth or severity of a defect by how it interacts with the at least one background characteristic. Different backgrounds can also help mitigate the effects of glare or reflections that might obscure defects in a single image. The detection of a screen defect based on at least two images of the screen with at least one different background characteristic may also enhance the flexibility of the method, as it can work effectively across different types of screens that interact different with falling light. Moreover, capturing two or more images provides more data points for analysis that can contribute to more accurate defect detection. Thus, in general, the proposed screen condition test can provide a more robust and reliable assessment of the screen surface condition.

The reflective surface is advantageously a mirror. A mirror has a high reflectivity, thus ensuring that the reflected image of the screen of the electronic device is bright and clear, maximizing the visibility of potential defects. Further, mirrors provide a consistent and uniform reflection across their entire surface. This uniformity contributes to the increase of accuracy of defect detection, as it eliminates variations that could be mistaken for screen damage. In general, mirrors introduce very little distortion to the reflected image. In addition, most mirrors provide a flat reflecting surface, which helps maintain the geometry of the reflected image. This simplifies the processing of the images. Moreover, mirrors generally do not add a colour tint to the reflected image, what helps with the detection of defects of the screen surface. Apart from these advantages that directly influence the quality of the reflected image, using a mirror as a reflective surface provides further results on the user's end. In particular, mirrors are ubiquitous in households and businesses, making them a practical choice for a widely accessible method. Mirrors can be easily cleaned to remove smudges or dust, which could otherwise interfere with the reflection quality, and come in various sizes, allowing users to choose an appropriately sized reflective surface for their electronic device. Lastly, most users are familiar with how mirrors work and how to position objects to see their reflection, which can lead to a more intuitive and successful use of the defect detection method.

However, any other type of reflective surface can be used provided it offers sufficient reflectivity and clarity for capturing usable images of the screen surface. Such reflective surfaces can for example be polished metal surfaces (e.g., stainless steel, aluminium), glass windows or doors, screens of other devices (e.g., TV, computer monitor), polished stone surfaces (e.g., marble, granite countertops), reflective plastic surfaces, ceramic tiles, chromed surfaces, reflective building facades (e.g., glass buildings), polished car surfaces, car windows, and reflective tabletops or furniture surfaces.

Within the context of the present disclosure, a screen can also be understood as screen glass and therefore, the screen surface can also be understood as a surface of the screen glass. However, it is noted that the term "screen glass" does not imply that the screen is made of glass. It rather refers to the transparent or translucent protective layer covering the display components of the electronic device while allowing visible light to pass through, thereby enabling users to view and interact with the interface of the electronic device. This layer can be made of various materials, including but not limited to glass (e.g., tempered glass, Gorilla Glass), plastic polymers (e.g., polycarbonate, acrylic), sapphire crystal and hybrid materials combining glass and plastic.

In particular, the method comprises the step of detecting a defect in/of the screen surface. The detection may advantageously be done by a condition-based algorithm and/or a classification algorithm, in particular a neural network.

The front-facing imaging device may advantageously be integrated in the electronic device. In other words, the front-facing imaging device is part of the electronic device. Alternatively, the front-facing imaging device can be an external imaging device physically or wirelessly connected to the electronic device. The external imaging device is configured to communicate with the electronic device. If the electronic device has an integrated front-facing imaging device, the screen condition test can be set up such that only the integrated front-facing device can be used.

The term "front-facing imaging device" means in particular that the imaging device is arranged such that it can capture a reflection of the screen when the electronic device is placed in front of a reflective surface such that its screen faces the reflective surface. In particular, the front-facing imaging device is arranged on a front side of the electronic device, which is the side of the electronic device, on which the screen is arranged. In other words, the imaging device and the screen are arranged on the same side of the electronic device. The front-facing imaging device" is in particular positioned to face the user when the electronic device is in a normal usage position. The front-facing imaging device can in particular be used for capturing selfies or conducting video calls.

The imaging device can preferably be a camera (digital camera), a CCD sensor, a CMOS sensor, a time-of-flight sensor, a light field sensor or any other type of imaging device that can capture visual information that can be processed as an image.

It is understood that all the aforementioned steps are executed by a processing means/data processing means or processing system/data processing system. In other words, the aforementioned steps are electronically executed or are computer-implemented steps. The data processing means or data processing system can be or comprise a processor/processing unit, preferably a CPU. It is however possible that the data processing system is or comprises a motherboard comprising a processor/processing unit, particularly a CPU, and/or a microcontroller. The data processing means/system may comprise a separate data processing unit that is configured to carry out a sub-step of the screen condition test.

The data processing means/system is advantageously configured to communicate with an operating system of the electronic device. The operating system of the electronic device can in particular connect the data processing means/system and a hardware component of the electronic device. In other words, the data processing means/system can communicate with a hardware component via the operating system.

In particular, the data processing means/system is configured to receive an input signal/data from or send an output signal/data to the electronic device, in particular the operating system and/or a hardware component of the electronic device for executing the steps of the screen condition test. For example, in the receiving step, the at least one image is received from the electronic device, in particular from its operating system, by the data processing means/system.

The aforementioned imaging device is a hardware component of the electronic device.

The processing means/data processing means or processing system/data processing system may be realised in the electronic device and/or an external system. In other words, the electronic device and/or the external system may comprise the processing means/data processing means or processing system/data processing system. The external system may for example be a server. For example, the processing step can be executed by the external system.

The defect of the screen surface may in particular comprise a crack, a scratch, a chip or a dent in the screen surface.

Advantageously, the at least one different predefined screen background characteristic may comprise a different predefined screen background colour.

This means that the at least two images are captured with different predefined screen background colours. In case of two images being captured, a first image is captured with a first predefined screen background colour and a second image is captured with a second predefined screen background colour different from the first predefined screen background colour.

The term "screen background colour" means a solid background colour, i.e., that all pixels of the screen have the chosen background colour, in particular so that all pixels of the screen have the same source colour in the image.

To this end, the screen (its display contents) may in particular be overlayed with the respective screen background colour.

Advantageously, white and grey, white and green or grey and green can be used for the at least two images. The colour "white" offers high contrast for dark defects, the colour "grey" provides a neutral background that can reveal both light and dark defects, and the colour "green" can be effective for detecting certain types of screen defects due to its position in the colour spectrum. Further, the aforementioned colour combinations help in differentiating between true defects and potential false positives caused by reflections or lighting conditions. The stark difference between the chosen colours (e.g., white and green) can accentuate subtle defects that might be less visible with more similar background colours. In general, the combination of a light colour (white) with either a neutral (grey) or a distinct colour (green) provides a good range for defect detection.

It is also possible that other colour combinations than white and grey, grey and green, and white and green are used for the at least two images.

Advantageously, the set of the screen background colours used for capturing the at least two images can include at least one colour from each of the following ranges (using HSL model):
- High Lightness: lightness equal to or higher than 95%
- Medium Lightness: lightness between 45% and 55%

Advantageously, the set of the screen background colours can include at least one colour may have a contrast ratio of 3.5:1 or greater.

Advantageously, each pair of colours in the set may have a ΔE value of at least 30.

Advantageously, the set of the screen background colours used for capturing the at least two images may include at least one colour with saturation equal to or larger than 90% and at least one colour with saturation lower than 10%.

Additionally or alternatively, the at least one different predefined screen background characteristic may advantageously comprise a different predefined screen background colour gradient.

Additionally or alternatively, the at least one different predefined screen background characteristic may advantageously comprise a different predefined screen background brightness. The background brightness may be predefined to be lower than 100%, preferably lower than 50%, more preferably of equal to 30%. Using a lower brightness level (below 100%, preferably below 50%, and optimally at 30%) reduces screen glare and reflections, thereby making screen surface defects more visible. A lower brightness setting may enhance contrast for certain types of defects, making them easier to be detected. The reduced brightness also helps conserve device battery power during the process.

Additionally or alternatively, the at least one different predefined screen background characteristic may advantageously comprise a different predefined screen background contrast. Varying screen background contrast levels between the captures of the at least two images can reveal defects that may be more visible under high or low contrast conditions, enhancing the detection of both subtle and pronounced screen defects.

Additionally or alternatively, the at least one different predefined screen background characteristic may comprise a different predefined screen background pattern (e.g., stripes, dots, grids). Using screen background patterns can help identify defects in the screen surface, as defects may disrupt the uniformity of the different patterns in a different manner, making thus it easier to detect them precisely.

Additionally or alternatively, the at least one different predefined screen background characteristic may comprise a predefined screen background simulated material texture (e.g., wood grain, fabric, metal). Different simulated background textures can interact uniquely with different types of screen defects, thereby potentially highlighting issues that might not be detectable with a screen background without a texture.

Additionally or alternatively, the at least one different predefined screen background characteristic may comprise a predefined noise pattern (e.g., film grain effect). Different noise patterns can be particularly effective in revealing subtle screen defects by creating a complex background that interacts with subtle screen defects in different ways, thereby making them more noticeable during image processing.

Additionally or alternatively, the at least one different predefined screen background characteristic may comprise a different predefined geometric shape. Geometric shapes, in particular with well-defined edges, can help detect screen areas with reduced clarity or responsiveness, as any distortion or blurring of the shape, in particular of its edges, may indicate a defect in that specific region of the screen.

If the at least one different predefined screen background characteristic comprises a different predefined screen background colour gradient and/or a different predefined screen background pattern and/or a predefined screen background simulated material texture and/or a a predefined noise pattern and/or a different predefined geometric shape, it is advantageous if the at least two images are captured with the same screen background colour. For example, if the at least two images are to be captured with different predefined screen background patterns, it is advantageous if the at least two images are captured with the same screen background colour, e.g. white.

It is understood that in case of instructing the front-facing imaging device to capture the at least two images of the screen surface reflected in the reflective surface with two or more different predefined screen background characteristics the two or more different predefined screen background characteristics are chosen such that the resulting backgrounds of the screen for the at least two images are different from each other.

Advantageously, the front-facing imaging device is instructed to capture the at least two images with at least one different predefined screen background characteristic while maintaining at least one (one or more) other predefined screen background characteristic constant. Similarly, the at least one further different predefined screen background characteristic may comprise a different predefined screen background colour and/or a different predefined screen background colour gradient and/or a different predefined screen background brightness and/or a different predefined screen background contrast and/or a different predefined screen background pattern (e.g., stripes, dots, grids) and/or a predefined screen background simulated material texture (e.g., wood grain, fabric, metal) and/or a predefined noise pattern (e.g., film grain effect) and/or a different predefined geometric shape. For example, the at least two images can be captured with the same brightness (brightness value) and different background colours. Varying at least one background characteristic while maintaining at least one other background characteristic constant can result in a more efficient defect detection in the screen surface.

According to an advantageous configuration, the at least one different screen background characteristic comprises the background colour of the screen and the at least one other predefined screen background characteristic that is maintained constant is the background brightness of the screen. In other words, the front-facing imaging device is according to the advantageous configuration instructed to capture the at least two images with different background colours of the screen, while maintaining the background brightness (background brightness value) of the screen constant, i.e., with different background colours and the same background brightness of the screen.

Varying background colour while maintaining constant brightness isolates the effect of colour on defect visibility, thereby increasing the possibility of revealing defects that are more apparent with certain colours. Maintaining constant brightness reduces the impact of ambient light variations on the defect detection process. It allows for better comparison between images, as the overall luminance remains consistent while only the colour changes. In other words, the application of different background colours ensures that the screen is tested under varying lighting conditions, which can help reveal cracks not visible under standard lighting. The different colours provide contrasting backgrounds that can highlight different kinds of cracks. This approach can be particularly effective for detecting subtle cracks or scratches that may be more visible against certain background colours.

According to an advantageous configuration, the at least two images comprise three images, wherein the background brightness is lower than 100%, preferably lower than 50%, more preferably of equal to 30%, and the background colours of the three images are white, grey and green. In other words, the step of instructing a front-facing imaging device to capture at least two images of the screen surface reflected in a reflective surface, in particular a mirror, with at least one different predefined screen background characteristic comprises or can be understood as instructing a front-facing imaging device to capture three images of the screen surface reflected in a reflective surface, in particular a mirror, with the same background brightness, wherein the background brightness is lower than 100%, preferably lower than 50%, more preferably of equal to 30%, and wherein the first image of the three images is captured with white as the screen background colour, the second image of the three images is captured with grey as the screen background colour, and the third image of the three images is captured with green as the screen background colour. This configuration benefits from the above-mentioned advantages regarding screen background brightness and said screen background colours. It is also possible that other colour combinations can be used for the three images. The set of colours for the screen background may advantageously include one colour with lightness equal to or higher than 95%, two colours with lightness between 45% and 55%, wherein at least one colour has saturation equal to or higher than 90% and at least one colours with saturation lower than 10%. Additionally, at least one pair of colours in the set may advantageously have a contrast ratio of 3.5:1 or greater. Advantageously, each pair of colours may have a ΔE value of at least 30.

Advantageously, the screen condition test may further comprise the step of instructing (by the data processing means/system) the presentation of a random code on the screen. In particular, the random code is presented in a bounding box (first bounding box) overlayed on the screen, in particular in the middle of the bounding box.

Advantageously, capturing of the at least two images is automatically instructed in response to/upon at least one condition being met.

The at least one condition mentioned above may advantageously comprise detection of the random code in the feed of the screen. In other words, capturing of the at least two images may be automatically instructed in response to/upon detecting the random code in the feed of the screen. It is understood that the code is of such difficulty that is can be considered as unguessable.

This sophisticated procedure establishes a unique and secure link between the test session and the specific electronic device at the precise moment of testing, significantly enhancing the overall security and integrity of the defect detection process. By generating and displaying a random code on the screen of the electronic device, the method creates a temporal and device-specific identifier that is virtually impossible to replicate or predict. This approach effectively eliminates the possibility of fraudulent attempts to manipulate the system, as users cannot employ the screen of another device or pre-recorded images to deceive the detection step for detecting the code. The dual-layer authentication - combining the physical presence of the electronic device with the dynamic, software-generated random code - creates a robust barrier against various forms of spoofing or replay attacks. Moreover, the procedure serves as an implicit confirmation of the correct usage of the application. The user experience (UX) design plays a crucial role in this aspect, with a predefined size and position of the random code on the screen. These design elements ensure that the electronic device is held at the optimal distance from the reflective surface and that the screen surface is properly oriented towards the reflective surface. This UX design not only guides the user to cause the front-facing imaging device to capture high-quality images but also acts as a mechanism to verify proper application usage.

The combination of the random code and the specific UX requirements creates a multi-faceted verification system. It ensures that the images being captured are not only of the intended device but are also taken under the correct conditions for accurate defect detection. This comprehensive approach significantly reduces the likelihood of false positives or negatives that might arise from improper device positioning or attempts to use pre-existing images.

Advantageously, the execution of the screen condition test may further comprise overlaying a bounding box on the screen.

The at least one condition mentioned above may advantageously comprise determining that the reflection of the electronic device in the reflective surface is placed within the bounding box (second bounding box) reflected in the reflective surface. In other words, capturing of the at least two images may be automatically instructed in response to/upon determining that the reflection of the electronic device in the reflective surface is placed within the bounding box (second bounding box) reflected in the reflective surface. It is understood that due to the fact that the front-imaging device is on and held in front of the reflecting surface, the electronic device appears/is reflected in the reflective surface multiple times. Given that, the expression "determining that the reflection of the electronic device in the reflective surface is placed within the bounding box" can be understood as "determining that the reflection of the electronic device shown in the feed of the reflection of the electronic device/in the reflected feed of the electronic device in the reflective surface is placed within the bounding box". In other words, this expression can be formulated as determining that the second reflection of the electronic device in the reflective surface is placed inside the bounding box.

As mentioned above, capturing of the at least two images may be advantageously automatically instructed in response to/upon at least one condition being met. It is, however, also possible that the capturing of the at least two images can be instructed in response to/upon receiving a corresponding user input and in response to/upon detecting the random code in the feed of the screen. For example, the user input may be the pressing of a button that has the function of capturing an image. For example, in a mobile phone, the shutter button or a button for changing the volume can be configured to capture an image, when pressed. Though the described manual way may be easily applicable in some scenarios, e.g. when an external front-facing imaging device is used, the automatic instruction enhances user convenience as the user is not tasked with a further action. Further, it may reduce fraud margins.

It is understood that, in the case where the least one condition in response to/upon which capturing the at least two images is automatically instructed comprises determining that the reflection of the electronic device in the reflective surface is placed within the bounding box (second bounding box) reflected in the reflective surface, checking if the entire screen of the electronic device is visible in each of the at least two images constitutes an additional check.

Advantageously, after the detection of the random code, the random code is removed from the screen, and then the at least two images are captured with the different background characteristic. For example, the background characteristic may be the background colour of the screen, while two images are to be captured. After the detection of the random code, the random code is removed from the screen and a first image is captured with a first background colour. To this end, a first background colour is displayed/overlayed on the screen and then the first image is captured. Then, a second image is captured with a second background colour. For the purpose of capturing said second image, a second background colour is displayed/overlayed on the screen and then the second image is captured.

Advantageously, the execution of the screen condition test may further comprise the steps of overlaying a bounding box on the screen and instructing the user to position the electronic device in front of the reflective surface such that the reflection of the electronic device in the reflective surface is placed within the bounding box (also) reflected in the reflective surface. The bounding box is in particular a predefined bounding box.

This approach allows for consistent positioning of the electronic device relative to the reflective surface, leading to more standardized image capture across different users and devices. Further, this approach significantly improves the quality and reliability of captured images by guiding users to achieve optimal framing and distance from the reflective surface, thereby reducing user error and minimizing the need for retakes. The bounding box serves as a known reference point in the captured images, facilitating easier and more accurate image processing while ensuring the entire screen surface is visible, thus improving the comprehensiveness of defect detection. This visual guidance simplifies the user experience and increases the likelihood of capturing high-quality images on the first attempt, saving time and computational resources. Furthermore, it allows for more precise calibration of image analysis algorithms, as the position and size of the screen within the image become more predictable. The method enhances the ability to detect edge-to-edge defects and, when combined with other authentication methods, can serve as an additional visual cue to verify the correct device is being imaged. It also improves the consistency of lighting and reflection conditions across different image captures, leading to more reliable defect detection. The known size of the bounding box enables more accurate scaling and measurement of detected defects. Overall, this feature significantly enhances the standardization, accuracy, and efficiency of the screen defect detection process, providing a robust foundation for comprehensive and reliable screen analysis.

It is noted that the first bounding box and second bounding box may advantageously be the same bounding box. In other words, a single bounding box can advantageously be overlayed on the screen of the electronic device.

Advantageously, the at least two images may be cropped to an area, in particular the whole area, within the bounding box before processing them to detect a defect of the screen surface. In other words, the execution of the screen condition test may advantageously comprise the step of cropping the at least two images to an area, in particular the whole area, within bounding box before the step of processing takes place. This ensures that only the necessary part of each image is used for the analysis, maintaining the user's privacy by not capturing or storing unnecessary background details from the user's environment. Thus, the proposed screen condition test reduces the risk of capturing and processing sensitive information that might be visible in the background of the received images. Further, the cropping step achieves an improved processing efficiency, as it reduces the amount of data that needs to be processed. This can significantly decrease computational time and resource usage, especially when dealing with high-resolution images or large volumes of data. Cropped images require less storage space and bandwidth for transmission, which can be beneficial for cloud-based processing or when storing large numbers of images. Further, concentrating on the specific area within the bounding box eliminates potential distractions or irrelevant information in the surrounding image areas. This focused approach can lead to more accurate defect detection by reducing the likelihood of false positives from elements outside the screen surface area in the images. In particular, the influence of varying backgrounds or environmental conditions that might be present in the uncropped portions of the images can be minimized. This isolation can lead to more robust and consistent defect detection results.

Advantageously, the step of processing the at least two images may comprise the sub-step of classifying, in particular by using a classification algorithm, each image of the at least two images as containing an intact screen or a damaged screen or as being inconclusive. The classification algorithm may advantageously be a neural network, in particular a convolutional neural network. It is further understood that the previously mentioned detection of a defect is an inherent part of the classifying sub-step.

Advantageously, a screen or screen surface may be identified as damaged if at least one image of the at least two images is classified as containing a damaged screen/screen surface. For more accurate results, a screen or screen surface may be identified as damaged if all the images of the at least two images are classified as containing a damaged screen/screen surface. A screen or screen surface may advantageously be identified as intact, if at least one image of the at least two images is classified as containing an intact screen/screen surface, and there is no image classified as containing a damaged screen/screen surface, even if one image is classified as inconclusive. The condition of the screen or screen surface may advantageously be identified as inconclusive, if all images are classified as inconclusive.

In the following, the case of classifying an image as inconclusive is further explained. The accuracy of the classification depends on the training and testing of the network. In other words, in the optimal case where the neural network is trained with images of all possible defects and its variations, in particular with all variations of cracked and not cracked screens, the classification would be 100% accurate in detecting defects, in particular in detecting cracks or for example distinguishing them from scratches. In the opposite case, the response of the neural network regarding the classification of an image might be scored with a low confidence by the network itself. In this case, the image is classified as inconclusive.

According to an advantageous configuration, the following principle is applied for identifying the condition of the screen or screen surface. In particular, if at least one image of the at least two images is identified as containing a damaged screen/screen surface, the screen or screen surface is identified as damaged. If at least one image of the at least two images is identified as containing an intact screen/screen surface, and there is no image classified as containing a damaged screen/screen surface, even if one is classified as inconclusive, the screen or screen surface is identified as intact.

This can also be described as follows:
Each result from the classification model (PASSED, FAILED, or UNKNOWN) is considered as a "vote" for the screen condition. The final decision-making process is based on the following logic.
- If there is at least one FAILED vote, FAILED is returned.
- If there is at least one PASSED vote and no FAILED vote, PASSED is returned.
- If all votes are UNKNOWN, the decision is UNKNOWN.

The vote "passed" corresponds to the case where an image is classified as containing an intact screen/screen surface. The vote "failed" corresponds to the case where an image is classified as containing a damaged screen/screen surface. The vote "unknown" corresponds to the case where an image is classified as inconclusive, i.e., where the condition of the screen/screen surface is identified as inconclusive.

The proposed classification has the advantages of result unification, decision stability and reliability. When there are multiple predictions for the screen, the method combines the votes to reach a unified decision. The method is designed to handle cases of ambiguity, providing the UNKNOWN result when the condition cannot be determined with certainty. The proposed approach improves reliability, reducing the likelihood of wrong decisions due to individual uncertain votes.

Advantageously, the execution of the screen condition test may further comprise the step of checking, in particular by using segmentation and/or object detection algorithms, if the entire screen of the electronic device is visible in each of the at least two images, and/or there are no obstacles hiding any part of the screen of the electronic device in each of the at least two images. By "visible", it is particular meant that a screen surface area is 100% inside the bounding box. By "no obstacles", it is in particular meant that it is checked if the user - either on purpose or by accident - has placed an object in front of the screen/screen surface.

In segmentation, the at least two images are advantageously processed such that the screen area is extracted as a binary mask where pixels belong either to the "screen" class or the "background" class. The mask-result of the segmentation is processed to identify valid contours and reject false positives.

The contours can advantageously be evaluated based on the following criteria:
- Area: The area is larger than 49000 pixels to be considered valid.
- Position in the Image (boundary check): Contours touching the image boundaries are considered excluded.
- Aspect ratio: Only contours with aspect ratios from 0.5 to 1.5 are allowed to ensure the geometry of the screen.
- Compactness ratio: contours with a compactness ratio below 0.7 are rejected.

If no valid contour is found, the system returns a failure reason:
- "NO_DEVICE": No device detected in an image.
- "BLOCKED": The contour is rejected due to contact with the boundaries or some occlusion that ruins the compactness ratio.

At this point, further quality checks may be applied. These checks may in particular fall under the later mentioned check if each of the at least two images, meet predetermined quality standards. Specifically, the segmentation result is evaluated based on a minimum fill ratio. In particular, the ratio of the contour area to the area of the bounding box of the screen region may be calculated. If the value is less than the minimum fill ratio, the image can be rejected with the reason "BLOCKED". Finally, valid contours can undergo flood filling to eliminate isolated empty areas, optimizing any discontinuities in the segmentation result.

In the classification step described above, the screen area of each image of the at least two images may advantageously be extracted based on the respective image and the mask provided by the segmentation. This area is given as input to the classifier, which in turn gives the screen condition based on a threshold. Specifically, the classifier result can advantageously be interpreted as follows:
- FAILED: for a value below 0.8
- PASSED: for a value above 0.85
- UNKNOWN: for a value between 0.8 and 0.85

Advantageously, the execution of the screen condition test may further comprise the step of checking if each of the at least two images, meet predetermined quality standards, in particular wherein the predetermined quality standards comprise a predetermined resolution and/or predetermined lighting conditions and/or absence of glares and/or reflections. The check if each of the at least two images meet predetermined lighting conditions corresponds to the later described lightning check with reference to the figures. Each of these checks for checking if each of the at least two images meet a predetermined resolution and/or predetermined lightning conditions and/or the condition of absence of glares and/reflections can be executed before or after the checking if the screen is visible in each of the at least two images, and/or if there are no obstacles hiding any part of the screen of the electronic device in each of the at least two images.

Advantageously, the classification step may take place only if the entire screen of the electronic device is visible in each of the at least two images and/or there are no obstacles hiding any part of the screen of the electronic device in each of the at least two images and/or the at least two images meet the predetermined standards. This conditional approach offers numerous significant advantages that enhance the overall effectiveness and reliability of the screen defect detection process. By proceeding with the classification step only when specific criteria are met, the method guarantees that analysis is based on complete and high-quality images, significantly improving the reliability of results and reducing the risk of false positives and negatives. This approach optimizes resource utilization by filtering out suboptimal images before the computationally intensive classification stage, thereby enhancing system efficiency. It also positively impacts the user experience by encouraging the capture of high-quality, unobstructed images, which in turn leads to more successful defect detection attempts. The standardization of the classification process creates a more uniform dataset for analysis, facilitating more reliable and comparable results across various devices and user environments. This standardized approach serves as a built-in quality control mechanism and improves the scalability of the method across different device models and screen types.

Advantageously, the execution of the screen condition test may further comprise the step of instructing a user to remove any screen protection films and/or clean the screen surface of the electronic device, wherein said step takes place before the step of instructing a front-facing imaging device to capture at least two images of the screen surface reflected in a reflective surface, in particular a mirror, with at least one different predefined screen background characteristic.

Screen protection films can interfere with the test and may cause a false detection of defects in the screen. Any dirt or debris on the screen can also lead to false negatives. By doing these, the user will improve the accuracy of the detection results. In particular, performing these actions improves image clarity by removing potential obstructions or contaminants that could interfere with accurate defect detection. Removing a screen protection film further ensures that the captured images represent the actual condition of the screen surface, and not of any temporary or removable elements. It also reduces false positives that might be caused by defects of a screen protection film rather than the screen surface itself. Moreover, potential light refraction or refection issues caused by a screen protection film, what could otherwise distort the appearance of the screen surface in captured images, can be eliminated. A more consistent and standardized image capture across different electronic devices, in particular regardless of whether their users have protected them by a screen protection film can be achieved when the user is instructed to perform these actions. Furthermore, superficial marks (e.g., smudges, fingerprints) and actual screen defects can be distinguished from each other. Lastly, the image processing can be simplified due to a reduction of variables and potential sources of error.

### Verification of the identity of an electronic device

In the following, the step of for verifying the identity of an electronic device is described.

The method comprises an initiating sub-step, an instructing sub-step, a receiving sub-step, and a processing sub-step. In the initiating sub-step, a screen capturing session of the electronic device for capturing a screen of the electronic device is initiated. The instructing sub-step comprises instructing the display or in other words the presentation of the device identifier on the screen of the electronic device during the screen capturing session. This is done in response to/upon receiving an input signal that indicates the completion of an action by the user. The action (the completion of the action) triggers a device identifier of the electronic device to be displayed on the screen. In the receiving sub-step, at least one image of the captured screen of the electronic device is received. In the processing sub-step, the at least one image, i.e. the at least one received image, is processed for capturing the device identifier of the electronic device. It is understood that all the aforementioned sub-steps are executed by a processing means/data processing means or processing system/data processing system. In other words, the aforementioned steps are electronically executed or are computer-implemented steps. The data processing means or data processing system can be or comprise a processor/processing unit, preferably a CPU. It is however possible that the data processing system is or comprises a motherboard comprising a processor/processing unit, particularly a CPU, and/or a microcontroller.

The data processing means/system is advantageously configured to communicate with an operating system of the electronic device. The operating system of the electronic device can in particular connect the data processing means/system and a hardware component of the electronic device. In other words, the data processing means/system can communicate with a hardware component via the operating system.

In particular, the data processing means/system is configured to receive an input signal/data from or send an output signal/data to the electronic device, in particular the operating system and/or a hardware component of the electronic device for executing the sub-steps of the verification step of the identity of the electronic device. For example, in the receiving sub-step, the at least one image is received from the electronic device, in particular from its operating system, by the data processing means/system.

The sub-step of initiating a screen capturing session of the electronic device allows for the capture of visual information displayed on the screen of the device, providing a reliable means of obtaining data directly from the electronic device. By capturing the device identifier directly from the screen, the method provides a high level of assurance that the device identifier belongs to the specific electronic device being verified. Thus, the possibility of fraud can be reduced, if not completely eliminated. The use of a screen capturing session also allows for remote verification without requiring physical access to the device by a person requesting the verification of the identity of the electronic device from its owner, making thus the process more convenient and efficient. Further, the proposed verification step can overcome or work around the limitation that all smartphone operating systems have chosen for privacy reasons to not allow application developers to programmatically (by means of programming) access any device identifier.

Within the context of the present invention, the term "device identifier" may in particular refer to a unique alphanumeric code associated with a specific electronic device. As will also be described later, an advantageous example of a device identifier is the International Mobile Equipment Identity (IMEI) number, which is in particular a 15-digit code used to uniquely identify mobile devices.

"Screen capturing" in particular means the process of digitally capturing visual output displayed on a screen of the electronic device. This may involve capturing still images or a moving image, in particular a video, of the screen contents.

The action to be completed is advantageously a predefined action by the manufacturer of the electronic device and cannot be altered by the user. In other words, the predefined action and the result achieved when the predefined action is performed/completed, i.e., the presentation of the device identifier on the screen of the electronic device, is pre-programmed/pre-stored in the electronic device as read-only data. In particular, entering the IMEI directly e.g. by typing, by the user is not as an action, which or the completion of which triggers the display/presentation of the device identifier within the context of the present invention. In other words, the action does not comprise (manually) entering/typing the device identifier.

It is further understood that the electronic device is configured to execute a screen capturing session. In other words, screen capturing is supported by the electronic device.

For completing said action, the user may enter/start an application and/or environment of the electronic device, via which the action can be completed.

In the instructing sub-step, the electronic device, in particular a display controller, may be instructed for displaying/presenting the device identifier on the screen of the electronic device during the screen capturing session. To this end, the data processing means/system sends a corresponding signal to the electronic device, in particular the operating system, which in turns instructs the display controller for presenting the device identifier on the screen.

It is understood that the expression "during the screen capturing session" means that the instructing sub-step is executed while the screen capturing session is still active, namely while the screen, i.e., its contents, is/are being captured. In other words, the screen capturing session continues when the instructing sub-step is executed. In particular, the screen capturing session continues, namely the capturing of the screen of the electronic device, continues until a termination signal is received. The advantageous configurations regarding the termination of the screen capturing session are explained later.

The processing sub-step may advantageously comprise the sub-step of determining if the device identifier is present in the at least one image of the captured screen and the sub-step of capturing (extracting) the device identifier from the at least one image if it is determined that the device identifier is present in the at least one image. In this case, the computer-implemented method for verifying the identity of an electronic device can in particular comprise the sub-steps of initiating a screen capturing session of the electronic device for capturing a screen of the electronic device, instructing the display of the device identifier on a screen of the electronic device during the screen capturing session, wherein the display of the device identifier is instructed in response to/upon receiving an input signal that indicates the completion of an action by the user, wherein the action triggers a device identifier of the electronic device to be displayed on the screen, receiving at least one image of the captured screen of the electronic device that includes the device identifier, and capturing the device identifier of the electronic device from the at least one received image.

If it is determined that the device identifier is not present in the at least one image, the method may advantageously comprise prompting the user to repeat the procedure. This can for example be done by instructing the electronic device to present a corresponding visual and/or audio message to the user. The situation that the device identifier is not present in the at least one image may for example arise from image quality issues, timing issues or technical failures of the electronic device during the execution of the method. As an example of possible timing issues, the following is described. If the user does not perform the required action as mentioned above, the method may advantageously proceed so that at least one image is received and processed to determine if the device identifier is present in the at least one image. Since the user has not performed the required action to trigger the presentation of the device identifier on the screen of the electronic device, the at least one image will not include the device identifier. Thus, the processing of the at least one image will result in determining that the device identifier is not present in the at least one image.

The method may further advantageously comprise instructing the user to perform the action that triggers the device identifier to be displayed on the screen of the electronic device, i.e. triggers the presentation of the device identifier on the screen. It is understood that this takes place before/prior to the above-described instructing sub-step.

The action that triggers the device identifier to be displayed on the screen may advantageously comprise entering, in particular dialling, a predefined code (device identifier retrieval code) or a predefined code sequence (device identifier retrieval sequence). This approach provides a standardized process for accessing the device identifier across different device models and operating systems. The predefined code or code sequence may be a universal code or code sequence, respectively, recognized by most or all models of an electronic device or a user-specific code or code sequence provided to the user. The term "code sequence" in particular reflects that multiple characters are entered in a specific order. As mentioned above, for completing the action, the user may enter/start an application and/or environment of the electronic device, via which the action can be completed. In this configuration, the application and/or environment of the electronic device is the one through which the predefined code or the predefine code sequence can be entered, in particular dialled. For example, if the electronic device is a mobile phone, said application and/or environment may in particular be a phone application, through which phone calls can be executed.

The action that triggers the device identifier to be displayed on the screen may advantageously comprise activating a designated user interface element on the electronic device. This can comprise for example tapping a specific button or icon on the screen of the electronic device. Using a designated user interface element provides a clear and straightforward way for users to trigger the presentation of the device identifier on the screen of the electronic device. "Designated" means in particular that the user interface element is specifically assigned to or chosen for the function of triggering the presentation of the device identifier and in particular also that it is intentionally marked for this specific use. As mentioned above, for completing the action, the user may enter/start an application and/or environment of the electronic device, via which the action can be completed. In this configuration, the application and/or environment of the electronic device is the one that comprises the designated user interface element.

The action that triggers the device identifier to be displayed on the screen may advantageously comprise accessing a device menu where the device identifier is stored. This approach leverages the internal storage to retrieve the device identifier, which can be particularly useful for electronic devices that do not have a built-in function to display the device identifier through a simple code or code sequence entry. As mentioned above, for completing the action, the user may enter/start an application and/or environment of the electronic device, via which the action can be completed. In this configuration, the application and/or environment of the electronic device is the device menu where the device identifier is stored.

As presented above, the device identifier may advantageously be the IMEI number of the electronic device. Using the IMEI number provides a standardized and unique identifier for electronic devices, enhancing the reliability of the verification process. It is in particular understood that, in this configuration, the electronic device advantageously has a SIM card slot. The action that triggers the IMEI number to be displayed on the screen may advantageously comprise entering, in particular dialling, a USSD number, for example *#06#, or activating a designated user interface element on the electronic device that is configured to dial this number, if supported from the device operating system of the electronic device. However, other device identifiers such as the serial number of the electronic device may also be used.

The sub-step of initiating the screen capturing session may advantageously comprise instructing the electronic device, in particular an operating system of the electronic device, to start capturing a plurality of still images or a moving image, in particular a video, of the screen of the electronic device. This means in particular that the data processing means/system instructs the electronic device in particular the operating system, accordingly. For this purpose, the data processing means/system sends a corresponding signal to the operating system. As a response, the electronic device starts capturing said plurality of still images or said moving image. Capturing a moving image allows for a continuous record of the screen contents, which can be particularly useful if the device identifier is displayed briefly or if multiple steps are required to access it. On the other hand, capturing a plurality of still images can be advantageous if there is not enough free space on the electronic device. The still images can in particular be understood as screenshots.

The sub-step of processing the at least one image may advantageously comprise using text recognition for capturing the device identifier. Text recognition techniques, such as optical character recognition (OCR), can automatically extract alphanumeric information from an image. This automation reduces the potential for human intervention and allows for rapid processing of multiple images if necessary. Other image analysis techniques can however also be used.

The verification step may advantageously further comprise the sub-step of validating the captured device identifier by using at least one external database with stored device identifiers, in particular by integrating with an API (Application Programming Interface) of the at least one external database. In the context of this disclosure, API may in particular refer to a set of protocols and tools that allow integration with external databases for the purpose of validating device identifiers.

Within the context of the present invention, "validating the captured device identifier" may be understood as the process of verifying the authenticity and accuracy of the captured device identifier through comparison with external data sources.

In particular, the sub-step of validating the captured device identifier may advantageously comprise querying the external database to validate if/that the captured device identifier exists in the external database. If the captured device identifier exists in the external database, it is concluded that the device identifier is valid. "External database" refers in particular to a collection of data stored outside the electronic device. Such an external database comprises stored device identifiers and information associated to the device identifiers. In the case of the device identifier being the IMEI number, the external database can be the database of an IMEI database provider.

The following sub-steps of the sub-step of validating the captured device identifier may advantageously be executed after the above sub-step, i.e., after it has been concluded that the device identifier is valid.

In particular, the sub-step of validating the captured device identifier may advantageously comprise retrieving device specifications associated with the captured device identifier from the external database and comparing them with specifications of the electronic device. "Device specifications" are in particular technical characteristics and capabilities of the electronic device. These may include information such as the device make and model, operating system, storage capacity, and other hardware features of the electronic device. If the comparison results in a match between the specifications of the electronic device and the retrieved specifications, the assurance that the device identifier is valid can be increased.

In particular, the sub-step of validating the captured device identifier may advantageously comprise checking a status field in the external database associated with the captured device identifier to determine if the device identifier is flagged as blocked by any service providers. Within the context of the present invention, the term "status field" in particular refers to a data element in an external database that indicates the current state or condition of a device identifier. This field may be used to flag identifiers associated with devices that have been reported as lost, stolen, or otherwise blocked from normal use.

In particular, the sub-step of validating the captured device identifier may advantageously comprise retrieving a manufacture date and/or a release date and/or an activation date, associated with the captured device identifier from the external database, and determining the age of the electronic device based on the retrieved date(s). "Manufacture date" or "release date" refers to the date when an electronic device was produced or officially made available for sale, respectively. The activation date is the date on which the electronic device was powered on for the first time. This information is used to calculate the age of the electronic device. It is noted that the age of the electronic device is understood as the time elapsed between the manufacture date, release date or activation date and the present date on which the method is executed. The determined age of the electronic device indicates the actual use period of the electronic device, when the activation date is available and used for the determination of the age of the electronic device. When only the manufacture date and/or the release date is/are available and/or if only these dates are used alone or in combination with each other for the determination of the age of the electronic device, the determined age indicates an estimation of the actual period of use of the electronic device.

Further, the determined age may be advantageously compared to a predefined age limit. The term "predefined age limit" may in particular refer to a maximum allowable age for an electronic device for a specific purpose. This may be set by a service provider or system administrator. This limit may be used to determine if the electronic device is eligible for certain services or processes based on its age. The predefined age limit may advantageously be stored in the external database.

The sub-step of validating the captured device identifier may advantageously comprise retrieving a warranty period, in other words whether the electronic device is still within the manufacturer's warranty period, and/or a distribution country of the electronic device, in other words the country in which the electronic device was first distributed in.

The result of the comparison of the determined age of the electronic device with the predefined age limit and/or the information about the warranty period and/or the information about the distribution country of the electronic device can in particular be used for validating commercial constraints.

The verification step may further advantageously comprise the sub-step of terminating the screen capturing session automatically after a predetermined time has lapsed from the initiation of the screen capturing session. This helps to limit the amount of data captured and processed, improving efficiency and reducing the risk of capturing unnecessary or sensitive information. Further, the automatic termination after a predetermined period serves as a failsafe mechanism, ensuring the session does not continue indefinitely if the user forgets to end it manually. The predetermined time can advantageously be set based on the expected duration needed to complete the action that triggers the device identifier to be displayed on the screen of the electronic device. The predetermined time may preferably be less than one minute, in particular equal to 30 seconds.

Alternatively, or in addition thereto, the verification step may advantageously comprise the sub-step of prompting the user to terminate the screen capturing session and in particular also the sub-step of terminating the screen capturing session in response to receiving a termination input by the user and/or if no termination input has been received within a predetermined period. Apart from the advantages of data minimization and efficiency improvement, this configuration allows the user to actively end the screen capturing session when he/she has completed the necessary actions, providing a sense of control and privacy. It is understood that the predetermined period is in particular counted from the time of prompting the use to terminate the screen capturing session. The predetermined period can advantageously be set based on the expected duration needed to complete the action that triggers the device identifier to be displayed on the screen of the electronic device. In particular, the sub-step of prompting the user to terminate the screen capturing session is advantageously executed in response to detecting or when it is detected, by the data processing means/system, that the application and/or environment that the user has entered/started for completing the action that triggers the presentation of the device identifier on the screen of the electronic device has been closed/ended by the user. Thus, if the present method is realised as a device identity verifying application, the sub-step of prompting the user to terminate screen capturing session can advantageously be executed in response to detecting or when it is detected, by the data processing means/system, that said application and/or environment of the electronic device has been closed/ended by the user and the user has entered again the device identity verifying application.

Further, limiting the duration of access to the screen content reduces the window of opportunity for potential security vulnerabilities. Further, ending the screen capture promptly can help conserve battery life by reducing unnecessary background processes. In particular, the combination of manual and automatic termination options increases the flexibility of the method, as it may accommodate different user preferences and scenarios.

If the method comprises both the sub-step of terminating the screen capturing session automatically after a predetermined time has lapsed from the initiation of the screen capturing session and the sub-step of prompting the user to terminate the screen capturing session, it is in particular understood that the sub-step of prompting the user to terminate screen capturing session is executed before the sub-step of terminating the screen capturing session automatically after a predetermined time has lapsed. In other words, the screen capturing session can maximally last the time predetermined time, for example 30 seconds, after initiation of the screen capturing session. If screen capturing is not terminated by the user within this time frame, the screen capturing session is terminated automatically, in the aforementioned example after 30 seconds from its initiation.

It is understood that terminating the screen capturing initiation means in particular that the data processing means/system instructs the electronic device, in particular the operating system of the electronic device, to terminate the screen capturing session. To this end, the data processing means/system sends a corresponding signal to the electronic device, in particular the operating system.

The at least one image, which is referred to in the receiving and the processing sub-step described above, may advantageously comprise at least one still image, in particular a plurality of still images. Receiving one or more still images can be advantageous in situations where bandwidth or storage limitations make receiving of a moving image, in particular a video, impractical. Still images can also be easier to process, thereby using less processing/computational power and/or speeding up the process.

Advantageously, the at least one image, which is referred to in the receiving and the processing sub-step, may however also comprise a moving image, in particular a video, or at least one frame, in particular a plurality of frames, of a moving image. In this configuration, it is understood that the sub-step of initiating the screen capturing session advantageously comprises instructing the electronic device, in particular its operating system, to start capturing a moving image, in particular a video, of the screen of the electronic device. From this moving image, in particular video, at least one frame is received and processed. Using frames from a moving image provides flexibility in selecting the clearest or most relevant image for processing.

According to an advantageous configuration, the sub-step of initiating the screen capturing session comprises instructing the electronic device, in particular its operating system, to start capturing a moving image, in particular a video, of the screen of the electronic device, while the sub-step of receiving at least one image of the captured screen of the electronic device and the sub-step of processing the at least one image for capturing the device identifier of the electronic device can be understood as receiving and processing the moving image, in particular the video. Thus, it can be ensured that the device identifier will be in at least one frame of the moving image.

The captured device identifier and/or information derived from validating the captured device identifier can advantageously be stored in the electronic device and/or transmitted to an external source. The external source may for example be a server.

It is noted that the identity of the electronic device advantageously corresponds to or is represented by the device identifier, while verifying the identity of the electronic device advantageously comprises capturing the device identifier and preferably also the information about the validity of the device identifier, i.e. whether the device identifier is valid or not.

Further disclosed is an electronic device that comprises the data processing means and a display/screen. This screen/display corresponds to the screen mentioned in combination with the previously described method.

The present invention further refers to a data processing system comprising means for carrying out the steps of the previously described computer-implemented method for verifying the identity of an electronic device. The data processing system mentioned when describing the screen condition test and the data processing system when describing the verification step are the same data processing system.

The data processing system may in particular comprise a processing unit for the initiating sub-step (first processing unit), a processing unit (second processing unit) for the instructing sub-step, a processing unit (third processing unit) for the receiving sub-step, a processing unit (fourth processing unit) for the processing sub-step, and a processing unit (fifth processing unit) for the validating sub-step. These units may be separate processing units or formed as a single processing unit.

The present invention also refers to a computer program product comprising instructions which, when the program is executed by a computer, in particular of an electronic device, cause the computer to carry out the steps (and its sub-steps) of the previously described computer-implemented method for certifying a condition of a screen surface of an (the) electronic device.

The present invention further refers to a computer-readable storage medium comprising instructions which, when executed by a computer, in particular of an electronic device, cause the computer to carry out the steps of the previously described computer-implemented method for certifying a condition of a screen surface of an (the) electronic device.

The electronic device may advantageously be a mobile phone, in particular a smartphone, a tablet, or a smartwatch. However, any electronic device that has a screen and has a front-facing imaging device or can be connected to a front-facing imaging device can be used with the proposed method. The electronic device may advantageously comprise a SIM card slot for receiving a SIM card.

The present invention may further refer to the electronic device or a system comprising the electronic device and the external system previously mentioned.

The described computer-implemented method for certifying a condition of a screen of electronic device has numerous potential applications.

This method can be used so that insurers can assess the initial condition of the electronic device when issuing policies and to verify damage claims efficiently in insurance underwriting and claims processing.

Retailers and manufacturers can utilize this method to swiftly and accurately evaluate the condition of electronic devices being traded in or sold back as part of device trade-in and buyback programs.

Companies engaged in device refurbishment can employ this method to verify screen condition before and after the refurbishment process, ensuring quality assurance for refurbished devices.

This method can further be used for determining if screen damage falls under warranty coverage, aiding in warranty validation and enforcement.

Companies offering device rentals or leases can apply this method to assess device condition at the commencement and conclusion of the rental period, supporting rental or leasing programs.

Online marketplaces can integrate this method, allowing sellers to easily verify and demonstrate the condition of devices they are offering for sale on auction or resale platforms.

Businesses can employ this method to regularly assess the condition of company-issued devices and plan for replacements or repairs as needed, enhancing corporate asset management.

This method can provide independent verification of device condition in peer-to-peer sales of used devices, enhancing consumer confidence in second-hand markets.

These and further details, advantages and features of the present invention will be described based on an embodiment of the invention and by taking reference to the accompanying figures.
Figure 1 shows a simplified schematic representation of an electronic device with a screen, the condition of which can be certified with the computer-implemented method for identifying a condition of a screen of an electronic device according to the embodiment of the present invention.
Figure 2 shows a schematic view of a data processing system that is configured to carry out the method according to the embodiment of the present invention.
Figure 3 shows a further simplified schematic representation of the electronic device.
Figure 4 shows a schematic representation of the computer-implemented method according to the embodiment of the present invention.
Figure 5 shows a schematic representation of part of a screen condition test of the computer-implemented method according to the embodiment of the present invention.
Figure 6 shows a schematic representation of part of the screen condition test of the computer-implemented method according to the embodiment of the present invention.
Figure 7 shows a flowchart referring to a part of the screen condition test of the computer-implemented method according to the embodiment of the present invention.
Figure 8 shows a flowchart referring to a step of verifying the identity of an electronic device of the computer-implemented method according to the embodiment of the present invention.
Figure 9 shows a schematic representation of the verification step of the computer-implemented method according to the embodiment of the present invention.

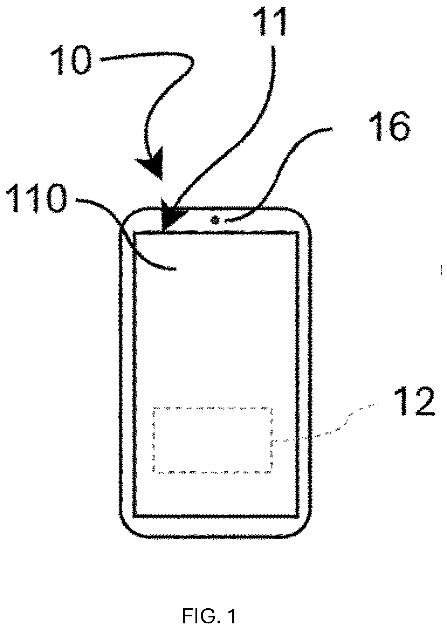

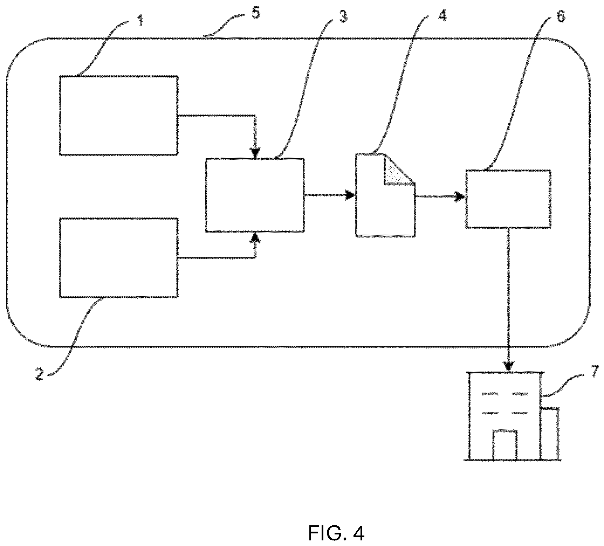

In the following, a computer-implemented method for certifying a condition of a screen of an electronic device according to an embodiment of the present invention is described in detail with reference to figures 1 to 9.

As can be seen from figure 1, the electronic device 10 is here a mobile phone, in particular a smartphone. The electronic device 10 has a front-facing imaging device 16, i.e., the front-facing imaging device 16 integrated in the electronic device 10. Alternatively, the front-facing imaging device 16 can be an external imaging device that is physically or wirelessly connectable to the electronic device 10 and configured to communicate with the electronic device 10. This can in particular be useful when an integrated front-facing imaging device 16 is defect. It is, however, understood that using the integrated front-facing imaging device 16 is a more practical option for the user.

The electronic device 10 has further a screen 11 with a screen surface 110. The front-facing imaging device 16 is in particular a camera (digital camera) and is arranged on the same side (front side) of the electronic device 10 with the screen 11. Thus, the front-facing device 10 is arranged such that it can capture a reflection of the screen 11 when the electronic device is placed in front of a reflective surface, e.g. a mirror, such that its screen 11 faces the reflective surface.

Though in the present embodiment the electronic device 10 is a mobile phone, the electronic device 10 can for example also be a tablet, a smartwatch, a laptop or any other type of electronic device that has a front-facing imagine device and a screen.

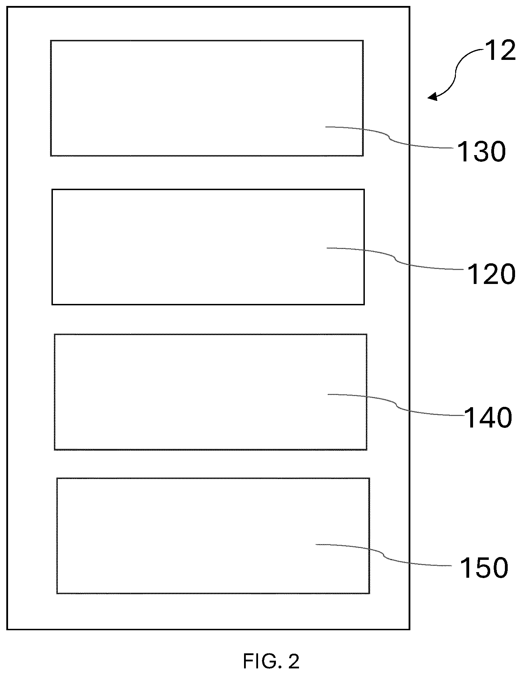

Further, with reference to figure 2, the electronic device 10 has a data processing system 12 that comprises means for carrying out the computer-implemented method according to the embodiment. More specifically, the data processing system 12 comprises a screen condition testing unit 130, a device identity verification unit 120, a certificate generating unit 140, and a certificate outputting unit 150. The screen condition testing unit 130 is configured to execute a screen condition test, the device identity verification unit 120 is configured to verify an identity of the electronic device 10, the certificate generating unit 140 is configured to generate a certificate and the certificate outputting unit 150 is configured to output a certificate, in particular the certificate generated by the certificate generating unit 140. The certificate generating unit 140 is configured to generate the certificate based on the outputs of the screen condition testing unit 130 and the device identity verification unit 120.

The data processing system 12 can in particular be realised as a processor/processing unit, preferably a CPU, of the electronic device 10, here the mobile phone. It is however, in particular depending on the type of the electronic device 10, also possible that the data processing system 12 corresponds to a motherboard comprising a processor/processing unit, in particular a CPU, or a microcontroller.

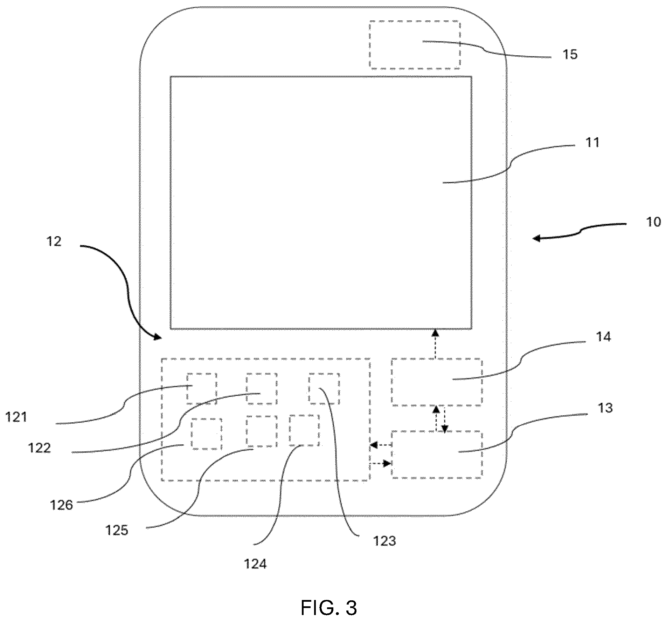

With reference to figure 3, the electronic device 10 also comprises an operating system 13, a display controller 14, and a SIM card slot 15. As can be viewed from said figure, the data processing system 12 is configured to communicate with and exchange input/output signals/data with the operating system 13, indicated by the two arrows pointing in opposite directions between the data processing system 12 and the operating system 13.

The data processing system 12 further comprises a first processing unit 121, a second processing unit 122, a third processing unit 123, a fourth processing unit 124, a fifth processing unit 125 and a sixth processing unit 126. These units are comprised by the device identity verification unit 120. Their function of these units will be described later in combination with the proposed computer-implemented method.

Moreover, it can be seen from figure 3 that the operating system 13 is configured to communicate with and exchange input/output signals/data with the display controller 14. In general, the operating system 13 can be seen as the link between the data processing system 12 and any hardware component of the electronic device 10. Thus, in the following, if the data processing system 12 executes a step of initiating or instructing an operation, it can in particular be understood that a signal/data (output signal/data) is sent from the data processing system 12 to the operating system 13, which then in turn instructs a corresponding hardware component of the electronic device 10 responsible for the respective operation to execute the operation. Accordingly, if the data processing system 12 executes a receiving step, this can particularly be understood as receiving a signal/data (input signal/data) from the operating system 12 which in turn has received a signal from a respective hardware component of the electronic device 10.

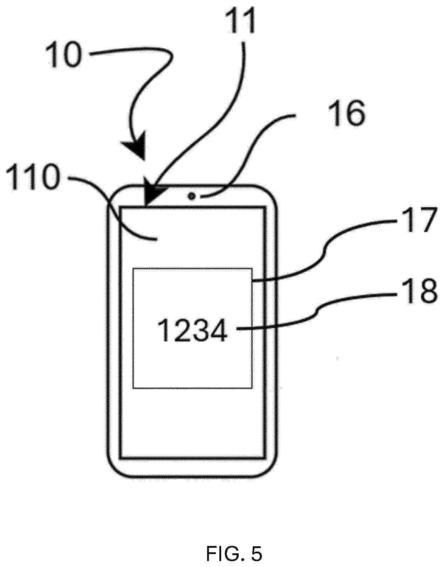

In the following, the steps of the computer-implemented method for certifying a condition of the screen 11 of the electronic device 10 is described with reference to figures 5 to 7.

The method, which can be implemented as an application (software application) 5 that runs on the electronic device 10 by the data processing system 12, comprises a screen condition test execution step 1, a device identity verification step 2, a certificate generating step 3 and a certificate outputting step 4.

In the screen condition test execution step 1, a screen condition test for identifying a condition of the screen surface 110 of the electronic device 1 is executed by the screen condition testing unit 130.

In the device identity verification step 2, the identity of the electronic device 10 is identified. This step is carried out by the device identity verification unit 120. As will be explained later, the identity of the electronic device 10 is reflected by a device identifier of the electronic device 10.

In the certificate generating step 3, a certificate 4 on the condition of the screen 11 based on the screen condition test execution step 1 and the device identity verification step 2 of the identity of the electronic device 10 is generated by the certificate generating unit 130. The certificate 4 comprises information about the condition of the screen 11 of the electronic device 10 and information about the identity of the electronic device 10. The information about the condition of the screen 11 comprises the condition of the screen, i.e. whether the screen is damaged or not. The information about the identity of the electronic device 10 comprises the image identifier of the electronic device 10.

The generated certificate 4 is then automatically output to an external source 7 by the certificate generating unit 150 in the certificate generating step 5. The external source 7 can for example include a computer, a computer system or a server of an external provider.

The application 5 provides in particular an underwriting flow and a claim flow, which each comprise the execution of the aforementioned steps. Depending on a user's input, either of the flows can be chosen. In case of the underwriting flow, the generated certificate 4 is an insurability certificate that can be considered by an insurance company for deciding on the eligibility of the electronic device 10 for an insurance. When the claim flow is chosen, the generated certificate 4 is a damage certificate that can be considered by an insurance company for deciding whether the user's claim is valid or not.

In the following, the screen condition execution step 1 for identifying a condition of the screen 11, in particular the screen surface 110, of the electronic device 10 according to the embodiment is explained.

The screen condition execution step 1 comprises a sub-step of instructing the front-facing imaging device 16 to capture at least two images of the screen surface 110 reflected in a reflective surface with at least one different predefined screen background characteristic, a sub-step of receiving the at least two images and a step of processing the at least two images to detect a defect of the screen surface. The defect of the screen surface 110 may in particular comprise a crack, a scratch, a chip or a dent in the screen surface. Here, the reflective surface is a mirror as mirrors are ideal reflective surfaces for the implementation of the present method, providing a reliable, accessible, and effective means of capturing high-quality reflected images of the screen surface 110 of the electronic device 10.

In particular, the front-facing imaging device 16 is instructed to capture the at least two images with at least one different predefined screen background characteristic while maintaining at least one other predefined screen background characteristic constant. In the present embodiment, the at least one different screen background characteristic comprises the background colour of the screen 110 (its feed) and the at least one other predefined screen background characteristic that is maintained constant is the background brightness of the screen 110. More specifically, three images are captured, wherein the background brightness is lower than 100%, preferably lower than 50%, more preferably equal to 30%, and the background colours of the three images are white, grey and green.

The screen condition execution step 1 begins with the sub-step of instructing a user to remove any screen protection films and/or clean the screen surface 110 of the electronic device 10. By doing so, the accuracy of the result of the defect detection will be increased, as screen protection films, dirt or debris can interfere with the defect detection and thus lead to a false detection of defects in the screen surface 110, i.e., to false negatives.

The, the front-facing imaging device 16 is instructed to be turned on, what results in the feed of the front-facing imaging device 16 to be displayed on the screen 11 of the electronic device 10. Then, an overlay that shows a bounding box 17 with a random code 18 in the middle is rendered on the screen 11. Incoming video frames are processed in order to detect this code 18. The bounding box 17 with the random code 18 in the middle of the bounding box 17 is shown in figure 5. For illustrative purposes, the number "1234" is shown as the code 18. However, it is understood that a rather lengthy code and/or code with a combination of numbers and/or letters and/or special characters is used so that the code is essentially unguessable. This reduces the risk of fraudulence from the user's side.

Following that, the user is instructed to position the electronic device 10 in front of the reflective surface such that the reflection of the electronic device 10 in the reflective surface is placed within the bounding box 17 reflected in the reflective surface.

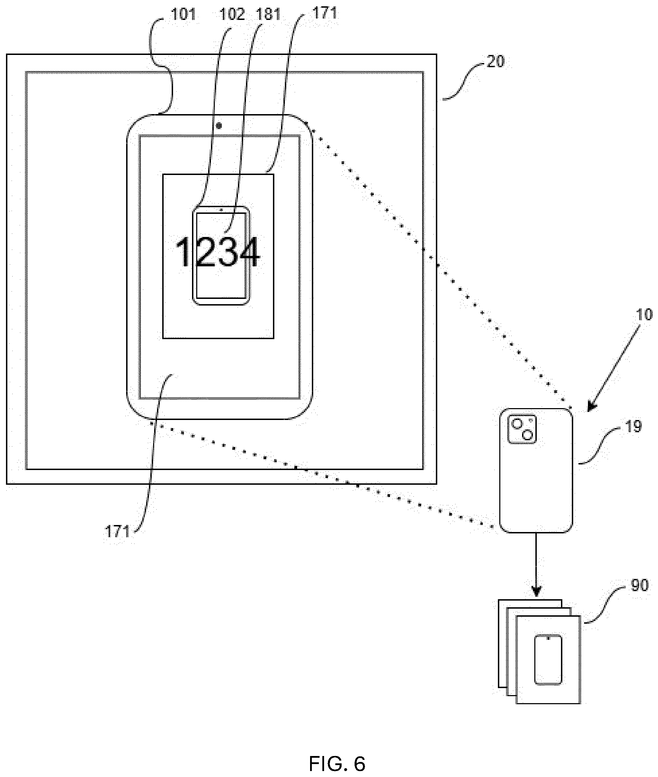

This will be better explained with reference to figure 6.

Figure 6 shows a schematic representation of the situation where the user holds the electronic device 10 in front of the reflective surface 20 formed as a mirror. For illustrative purposes, the user is not depicted in the figure.

As can be seen from said figure, the electronic device 10, here a mobile phone, is held with its front side and thus the screen surface 110 facing the reflective surface 20 and its rear side 19 facing the user.

As the electronic device 10 is held in front of the reflective surface 20, a first reflection 101 of the electronic device 10 is created in the reflective surface 20. Consequently, the screen surface 110, the bounding box 17 and the code 18 are also reflected in the reflective surface 20 resulting in a reflected screen surface 11, a reflected bounding box 171 and a reflected code 181. These reflections of the screen surface 110, the bounding box 17 and the code 18 are characterized also as first reflections of the corresponding elements.

At the same time, a second reflection 102 of the electronic device 10 is created in the reflective surface 20 due to the fact that the front-imaging device 16 is on and its feed is shown on the screen 11 of the electronic device.

The instruction to the user to position the electronic device 10 in front of the reflective surface 20 such that the reflection of the electronic device 10 in the reflective surface 20 is placed within/inside the bounding box 17 reflected in the reflective surface 20 thus means that the second reflection 102 of the electronic device 10 should be positioned inside the reflected bounding box 171.

It is understood that the user most of the times will have to move towards or away from the reflective surface 20, depending on the user's position, so that the correct positioning of the screen 10 is achieved. In figure 6, the state in which the electronic device 10 is correctly placed within the bounding box 17 reflected in the reflective surface 10 is presented.

This procedure binds the method for identifying the condition of the screen surface 110 of the electronic device 10 uniquely to the electronic device 10 at that moment, enhancing security and eliminating fraud as the user cannot use the screen of another device. Additionally, it confirms the correct use of the application since the user experience is designed in such a way (size and position of the random code 18) that ensures that the device screen 11 is facing the reflective surface 20, and it is being held in the correct distance from it.

As soon as the random code 18 is detected, more specifically in response to the detection of the random code 18, by the front-facing imaging device 16, the application automatically begins the image capturing process by instructing the front-facing imaging device 16 correspondingly. By the automatic instruction, user convenience is maximised, and it can be ensured that the images 90 are taken exactly when the conditions are met, without any delay that could allow for manipulation. It is understood that the detection of the random code 18 means detecting the reflected code 181 by the front-facing imaging device 16. For the image capturing process to start, the random code 18 is removed after being detected.

The image capturing process comprises capturing, as previously described, of three images 90 with background brightness of the screen 11 lower than 100%, preferably lower than 50%, more preferably equal to 30%, and the background colours of white, grey and green. The background brightness of the screen 11 is chosen to be the same for all three images 90.

To this end, the colour white is displayed/overlayed on the screen 11 as its background colour and then the first image 90 is captured. Then, the colour grey is overlayed/displayed on the screen 11 as its background ground colour and the second image 90 is captured. Finally, the colour green is overlayed/displayed on the screen 11 and then the third image 90 is captured. It is understood that the order in which the background colours are overlayed on the screen 11 does not play any role.

In order to reduce processing time but also process only the part of the images 90 that are of interest for the detection of defects of the screen surface 110, each of the three images 90 is cropped to the area within the bounding box.

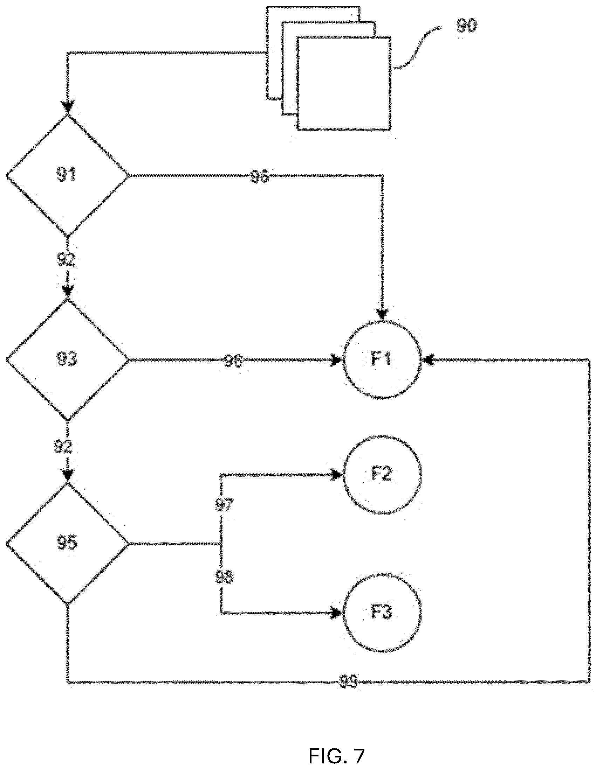

Then, the screen condition execution step 1 proceeds to the processing sub-step, via which defects in the screen surface 90 are detected. This is explained with reference to the flow diagram of figure 7.

More specifically, the sub-step of processing of the three images 90 comprises a check 91. The check 91 comprises a screen presence check. The screen presence check comprises checking if the entire screen 11 of the electronic device is visible in each of the three images 90 and if there are no obstacles hiding any part of the screen 11 of the electronic device 10 (e.g. the user's fingers or another object) in each of the three images 90. This sub-step uses segmentation and/or object detection. Segmentation algorithms are used on the entire set of images 90 for accurately delineating the screen 11 from the rest of the ambient space in the images 90. This ensures that the analysis focuses solely on this area and ensures that any assessment of the screen's integrity is not compromised by partial visibility. On top of that, this ensures that the data used in later sub-steps is valid and representative of the screen's condition.

If this is not the case, i.e. in case of failure 96, the user is notified providing a hint so that the capture process is repeated. This is denoted by operation F1 in the flow diagram of figure 7. For example, the user can be presented with a message on the screen 11 of the type "Please repeat the process making sure there are no fingers covering the screen" or "Please repeat the process making sure that the device is inside the bounding box".

The check 91 may further comprise an image lightning check for checking if the images 90 are dark or oversaturated. In particular, it is checked if the percentage of the dark pixels of an image 90 exceeds 50% or the percentage of the oversaturated pixels exceeds 50%. A dark pixel is in particular a pixel with an intensity lower than 50, while an oversaturated pixel is in particular a pixel with an intensity higher than 240. If any of those criteria is met for an image 90, the image is not processed anymore, i.e., this image is rejected. The processing continues for the rest of the images. Advantageously, the image lightning check may be executed before the screen presence check 91.

If the result of the screen presence check is a success 92, the screen condition execution step 1 proceeds to a quality check 93. The quality check comprises checking if each of the three images 90 meets predetermined quality standards comprising a predetermined resolution and/or absence of glares and/or reflections. The quality check 93 ensures that the images 90 taken have the required resolution and that no glares/reflections are detected that could impact the defect detection. It is noted that the screen lightning check can be executed as part of the quality check 93 and thus not before but after the screen presence check.

If the result of the quality check is a failure 96, the screen condition execution step 1 proceeds to operation F1. Further, the user is notified that the screen condition execution step 1 cannot continue due to unsuitable conditions and provides clues about the problematic factor so that the user can fix the problem so that new images 90 can be captured.

If the result of the quality check is a success 92, the screen condition execution step 1 proceeds to classification sub-step 95 for classifying each of the images 90 as containing an intact screen 11, a damaged screen 11 or a screen 11 of inconclusive condition. The classification is performed by use of a neural network. If each of the images 90 is classified as containing an intact screen, what is denoted by a first status 97, the method results in quality acceptance F2 of the screen surface 110. If at least one image 90 is classified as containing a damaged screen 11, this is denoted as a second status 98 resulting in quality rejection F3 of the screen surface 110. If the classification is, this is denoted by a third status 99. The latter leads to operation F1, where the user is asked to retry. The screen 11 is identified as damaged if at least one image 90 of the images 90 is classified as damaged with high confidence.

If the classification of the screen 11 is inconclusive, the images 90 can be sent to an external source, in particular to trained personnel that can zoom in or apply other filters to the images and provide the final verdict of the classification. Moreover, these marginal cases can be included in the training dataset so that future similar cases are handled successfully by the neural network.

For the classification of the images 90, lightweight convolutional neural network (CNN) models are trained to detect high-resolution details, including subtle cracks on the screen 11. In particular, the MobileNetv2 was used after having been trained in images of screens with defects out of a synthetic dataset. In particular, it was trained for 200 seasons with a batch size 4, Adam optimizer and the technique ReduceLROnPlateau. However, other models can also be used for classification purposes.

For the segmentation, the UNet++ model was used. It was trained for two classes (screen and background) using pre-trained weights in combination with the images from the created dataset. The dataset was created in Labelbox. It was trained for 100 epochs with a batch size of 6 on an NVIDIA GeForce RTX 4060 card. For training, the Adam optimizer was used, binary Tversky loss as the loss function, and initial learning rate was 5e-4.

Both models, for the segmentation and the classification, were trained using the classic supervised learning method, where training and test images are accompanied by corresponding groundtruth labels. The datasets in both models were divided into train, validation, and test data sets for training, validation, and testing, respectively. Finally, the use of grayscale images was chosen to reduce computational complexity in both segmentation and classification. It is however noted that any other model can be used for these purposes.

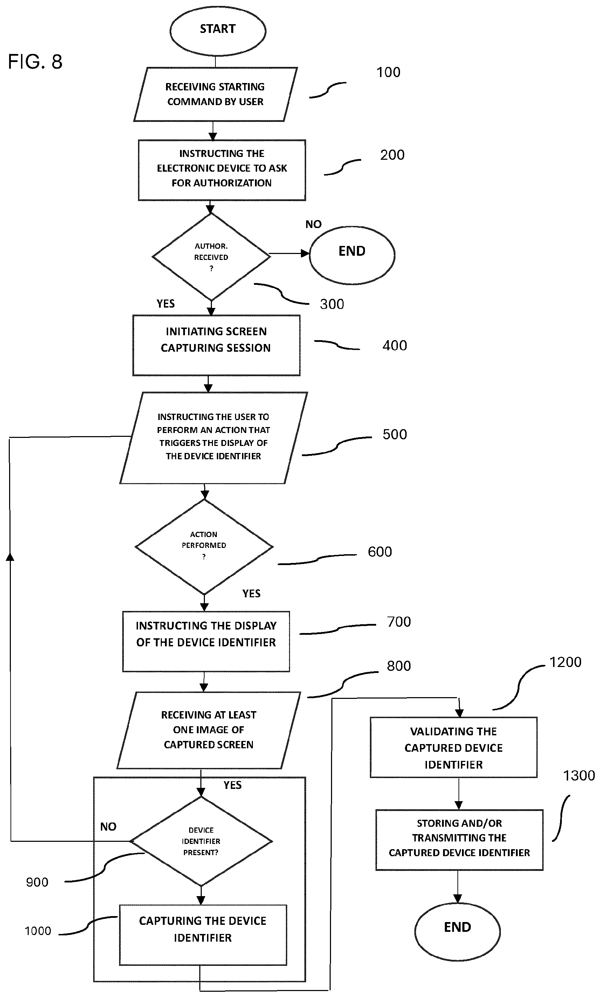

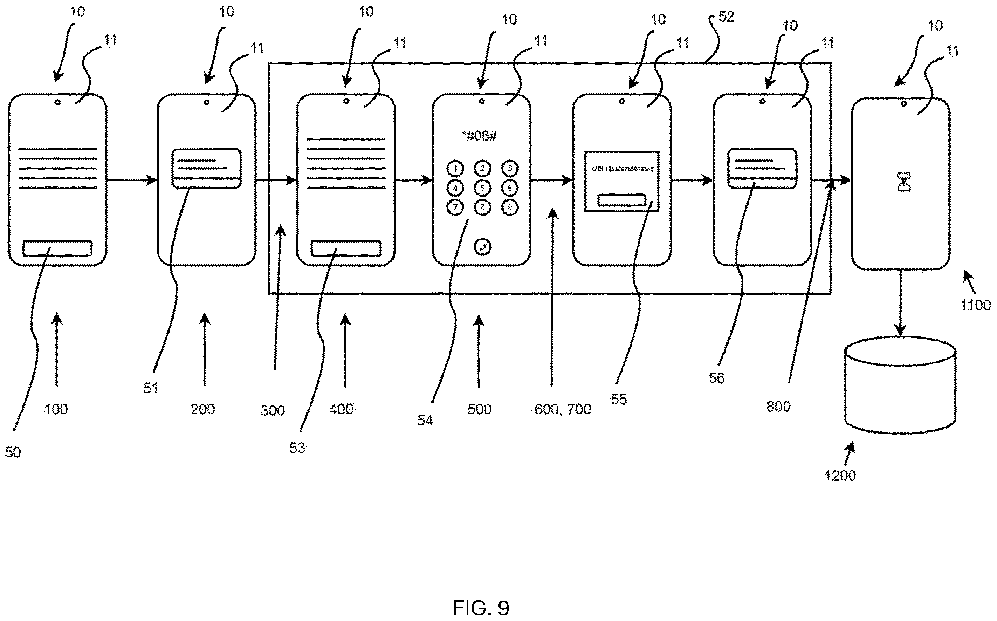

In the following, the device identity verification step 2 for verifying the identity of the electronic device 10 according to the embodiment of the present invention is described in detail with reference to figures 8 and 9.

The identity of the electronic device 10 to be verified comprises a device identifier that, in the present embodiment, corresponds to the IMEI number of the electronic device 10. Using the IMEI number as the device identifier has the advantage that the IMEI number constitutes a standardized identifier used for identifying electronic devices of different manufacturers. It is, however, possible that other device identifiers can be used, such as the serial number of the electronic device 10.

According to figure 8, the device identity verification step 2 may start by receiving a starting command by a user for initiating a screen capturing session in a starting sub-step 100. This can be done by the user clicking a button 50 shown on the screen 11 of the electronic device 10. The button 50 is depicted in figure 9. In other words, clicking the button 50 sends the starting command to the data processing system 12.

Upon/in response to receiving the starting command, the electronic device 10, in particular the operating system 13, is instructed to ask the user to authorize the initiation of the screen capturing session for capturing a screen of the electronic device in an authorization instructing sub-step 200. To this end, a system dialog 51 according to figure 9 can for example appear on the screen 11. Via the system dialog 51, the user can choose the authorization of the initiation of the screen capturing session. The starting command is received by the data processing system 10, which also sends the instruction to the electronic device 10, in particular the operating system 13, to ask the user said authorization.

If a positive answer from the user is received, namely if the user has authorized the initiation of the screen capturing session in an authorizing sub-step 300, the method proceeds to the execution of an initiating sub-step 400. In the initiating sub-step 400, a screen capturing session of the electronic device 10 for capturing the screen 11, namely the contents displayed on the screen 11, is initiated. This sub-step is executed by the data processing system 12 and in particular by the first processing unit 121. If no authorization is received, the execution of the device identity verification step 2 and thus the method is terminated.

The initiating sub-step 400 particularly comprises instructing the electronic device 10, in particular its operating system 13, to start capturing a video of the screen 11, i.e., a video of its displayed contents over time. As a response to said instruction, the electronic device 10 starts capturing the video. The screen capturing session is indicated by a box 52 in figure 9.

Following that, the method proceeds to the execution of a user instructing-prompting sub-step 500.

The user instructing-prompting sub-step 500 comprises instructing the user during the screen capturing session to perform a specific action that triggers the device identifier, here the IMEI number, to be displayed on the screen 11 of the electronic device 10, i.e., triggers the presentation of the device identifier on the screen 11. This can be done for example by presenting a dialog 53 on the screen 11 of the electronic device 10 asking the user to complete the specific action, as shown in figure 9. The action to be completed is a predefined action by the manufacturer of the electronic device 10 and cannot be altered or modified by the user. In other words, the predefined action and the result that is achieved when the predefined action is performed, namely the presentation of the device identifier on the screen 11 of the electronic device 10, is pre-programmed/pre-stored in the electronic device 10 as read-only data.

The specific action comprises entering, in particular dialling, a predefined code (device identifier retrieval code) or a predefined code sequence (device identifier retrieval sequence) that causes the device identifier, here the IMEI number, to be displayed on the screen 11. In particular, the user is asked to dial a USSD number, for example *#06#. In this case, this means that the user receives the dialog 53 that is of the type "Dial the USSD number *#06#" on the screen 11 of the electronic device 10. The phone app 54 via which the user can dial said predefined code is shown in figure 9.

In addition to entering a predefined code or alternatively, the specific action may comprise activating a designated user interface element on the electronic device 10 that is configured to dial this number, if supported from the device operating system 13 of the electronic device 10. Further, the specific action may also comprise accessing a device menu where the IMEI is stored.

In a checking sub-step 600, it is checked whether the action has been performed, in particular whether an input signal that indicates the completion of said action has been received. Advantageously, for the method to be further executed, the action will have to be performed, in particular the input signal will have to be received, by a time equal to or less than a predetermined time elapsed from the initiation of the screen capturing session. Further, the execution of the method can be terminated if no termination signal has been received in response to prompting the user to terminate the screen capturing session or if a termination signal has not been received within a predetermined time from the time the user is prompted to terminate the screen capturing session.

If the answer is positive in the checking sub-step 600, the method proceeds, in response to receiving said input signal, with the execution of an instructing sub-step 700. In the instructing sub-step 700, the presentation of the device identifier on the screen 11 of the electronic device 10 during the screen capturing session is instructed.

More specifically, the electronic device 10, in particular a display controller 14 via the operating system 13, is instructed for displaying/presenting the device identifier on the screen 11 during the screen capturing session. The instructing sub-step 700 is executed by the data processing system 12 and in particular the second processing unit 122. In figure 9, the device identifier (IMEI) dialog 55 is shown. Further, a system element 56 for the terminated screen capturing session is shown in figure 9.

It is then expected that said instruction causes the electronic device 10 to display the device identifier on the screen 11 during the screen capturing session. This means that it is expected that the captured video of the screen contents will include at least one frame, which contains the device identifier, here the IMEI.

The method proceeds then with a receiving sub-step 800, which comprises receiving the video of the captured screen 11. The receiving sub-step 800 is executed by the data processing system 12 and in particular by the third processing unit 123.

Subsequently, a processing sub-step 1100 is executed. In the processing sub-step 1100, the received video is processed for capturing the device identifier. According to the flowchart of figure 8, the processing sub-step 1100 comprises a presence determining sub-step 900 and a capturing sub-step 1000.

In the presence determining sub-step 900, it is determined if the device identifier is present in the video, i.e., in at least one frame of the video, of the captured screen 11. If the answer is positive, i.e., if the presence of the device identifier is determined in the presence determining sub-step 900, the device identifier is captured (extracted) from the video in a device identifier capturing sub-step 1000.

If the answer is negative in the presence determining sub-step 900, i.e., if it is determined that the device identifier is not present in the video, the device identity verification step 2 may advantageously comprise prompting the user to repeat the procedure. In particular, the method may return to the instructing-prompting step 500.

For processing the received video for capturing the device identifier, text recognition can be used.

The processing sub-step 1100 is executed by the data processing system 12 and in particular the fourth processing unit 124.

After the processing sub-step 1100, a validating sub-step 1200 for validating the captured device identifier is executed by the data processing system 12 and in particular by the fifth processing unit 125. To this end, at least one external database with stored device identifiers is used. In particular, the data processing system 12 integrates with an API of the at least one external database.

In particular, the validating sub-step 1200 may comprise querying the external database to validate if/that the captured device identifier exists in the external database. If the captured device identifier exists in the external database, it is concluded that the device identifier is valid. Further, the validating sub-step 1200 may comprise, after it is concluded that the device identifier is valid, retrieving device specifications associated with the captured device identifier from the external database and comparing them with specifications of the electronic device 10. The specification may include information such as the device make and model, operating system, storage capacity, and other hardware features of the electronic device 10. If the comparison results in a match between the specifications of the electronic device 10 and the retrieved specifications, the assurance that the device identifier is valid can be increased.

Further, the validating sub-step 1200 may comprise checking a status field in the external database associated with the captured device identifier to determine if the device identifier is flagged as blocked by any service providers.

The validating sub-step 1200 may also comprise retrieving a manufacture date and/or a release date and/or an activation date associated with the captured device identifier from the external database, and determining the age of the electronic device based on the retrieved date(s). The determined age may then be compared to a predefined age limit which refers to a maximum allowable age for the electronic device 10 for a specific purpose.

The captured device identifier and/or information derived from the validating sub step 1200 can then be stored in the electronic device 10, in particular in a memory thereof, and/or transmitted to an external source. This sub-step is executed by the sixth processing unit 126. The external source may for example be a server.

By capturing the IMEI directly from the screen 11, the proposed device identity verifications step 2 for verifying the identity of the electronic device 10 according to the embodiment provides a high level of assurance that the IMEI belongs to the specific electronic device 10 being verified. Thus, the possibility of fraud can be reduced, if not completely eliminated.

It is noted that the screen condition execution step 1 may carried out before or after the device identity verification step 2 in the present embodiment.

As mentioned above, the generated certificate 4 comprises information about the condition of the screen 11 of the electronic device 10 and information about the identity of the electronic device 10. In particular, the generated certificate may further comprise the make and model of the electronic device 10 and/or the name and the version of the operating system 13 and/or the storage capacity of the electronic device 10 and/or a Boolean flag (i.e., yes/no) that determines if the specific device identity has been blocked by any telecommunication providers and/or the activation date and/or the estimated purchase date and/or the release date of the electronic device 10 and/or a Boolean flag that determines if the electronic device 10 was under the manufacturer's warranty at the time that the certificate 4 was generated and the start and end dates of the warranty period.

### Reference signs

- 1: screen condition test execution step
- 2: device identity verification step
- 3: certificate generating step
- 4: certificate outputting step
- 5: application
- 6: certificate
- 7: external source
- 10: electronic device
- 11: screen
- 12: data processing system
- 13: operating system
- 14: display controller
- 15: SIM card slot
- 16: front-facing imaging device
- 17: bounding box
- 18: code
- 19: rear side
- 20: reflective surface
- 51: system dialog
- 52: box
- 53: dialog
- 54: phone app
- 55: device identifier (IMEI) dialog
- 90: image
- 91: screen presence check
- 92: success
- 93: quality check
- 95: classification step
- 96: failure
- 97: first status
- 98: second status
- 99: third status
- 100: starting step
- 101: first reflection of electronic device
- 102: second reflection of electronic device
- 110: screen surface
- 111: reflected screen surface
- 120: device identity verification unit
- 121: first processing unit
- 122: second processing unit
- 123: third processing unit
- 124: fourth processing unit
- 125: fifth processing unit
- 126: sixth processing unit
- 130: screen condition testing unit
- 140: certificate generating unit
- 150: certificate outputting unit
- 171: reflected bounding box
- 181: reflected code
- 200: authorization instructing sub-step
- 300: authorizing sub-step
- 400: initiating sub-step
- 500: instructing-prompting sub-step
- 600: checking sub-step
- 700: instructing sub-step
- 800: receiving sub-step
- 900: presence determining sub-step
- 1000: device identifier capturing sub-step
- 1100: processing sub-step
- 1200: validating sub-step
- 1300: storing and/or transmitting sub-step

- F1: operation
- F2: quality acceptance
- F3: quality rejection

## Claims

**1.** A computer-implemented method for certifying a condition of a screen (11) of an electronic device (10), comprising the steps:
- executing a screen condition test for identifying a condition of a screen surface (110) of an electronic device (10),
- verifying the identity of the electronic device (10), and
- generating a certificate on the condition of the screen (11) based on the result of the screen condition test and the verification of the identity of the electronic device (10).

**2.** The method of claim 1, wherein the method comprises the step of executing an underwriting flow comprising the step of executing the screen condition test, the step of verifying the identity of the electronic device (10) and the step of generating the certificate on the condition of the screen (11), wherein the certificate is an insurability certificate.

**3.** The method of claim 2, wherein the step of executing the underwriting flow is initiated by detection of a user input.

**4.** The method of any of the preceding claims, wherein the method comprises the step of executing a claim flow comprising the step of executing the screen condition test, the step of verifying the identity of the electronic device (10) and the step of generating the certificate on the condition of the screen (11), wherein the certificate is a damage certificate.

**5.** The method of claim 4, wherein the step of executing the claim flow is initiated by detection of a user input.

**6.** The method of any of the preceding claims, further comprising the step of outputting the certificate (6), in particular automatically, to an external source (7).

**7.** The method of any of the preceding claims, wherein the certificate (6) comprises information about the condition of the screen (11) of the electronic device and about the identity of the electronic device (10).

**8.** The method of any of the preceding claims, wherein the step of executing the screen condition test comprises the subs-steps of:
- instructing a front-facing imaging device (16) to capture at least two images of the screen surface (110) reflected in a reflective surface (20), in particular a mirror, with at least one different predefined screen background characteristic,
- receiving the at least two images (90), and
- processing the at least two images (90) to detect a defect of the screen surface (110).

**9.** The method of claim 8, wherein the at least one different predefined screen background characteristic comprises a different predefined screen background colour,
and/or
wherein the front-facing imaging device (16) is instructed to capture the at least two images (90) with at least one different predefined screen background characteristic while maintaining at least one other predefined screen background characteristic constant, in particular wherein the at least one different screen background characteristic comprises the background colour of the screen and the at least one other predefined screen background characteristic that is maintained constant is the background brightness of the screen.

**10.** The method of any of the preceding claims, wherein the step of verifying the identity of the electronic device (10) comprises the sub-steps of:
- initiating a screen capturing session of the electronic device (10) for capturing a screen of the electronic device (10),
- instructing the display of the device identifier on a screen (11) of the electronic device (10) during the screen capturing session, wherein the display of the device identifier is instructed in response to/upon receiving an input signal that indicates the completion of an action by the user, wherein the action triggers a device identifier of the electronic device (10) to be displayed on the screen (11),
- receiving at least one image of the captured screen (11) of the electronic device (10), and
- processing the at least one image for capturing the device identifier of the electronic device (10).

**12.** The method of claim 11, further comprising the sub-step of validating the captured device identifier by using at least one external database with stored device identifiers, in particular by integrating with an API of the at least one external database.

**13.** A data processing system (12) comprising means for carrying out the steps of the method of any of claims 1 to 12.

**14.** A computer program product comprising instructions which, when the program is executed by a computer, cause the computer to carry out the steps of the method of any of claims 1 to 12.

**15.** A computer-readable storage medium comprising instructions which, when executed by a computer, cause the computer to carry out the steps of the method of any of claims 1 to 12.
